**Europäisches Patentamt**

**European Patent Office**

**Office européen des brevets**

(19)

(11) Veröffentlichungsnummer: **0 224 602 B1**

(12)

# EUROPÄISCHE PATENTSCHRIFT

(45) Veröffentlichungstag der Patentschrift :
16.01.91 Patentblatt 91/03

(51) Int. Cl.$^5$ : **G01C 21/16**

(21) Anmeldenummer : 85115180.3

(22) Anmeldetag : 29.11.85

(54) **Verfahren zur schnellen Berechnung von Lagewinkeln für mit analytischen Plattformen ausgerüstete Fahrzeuge.**

(43) Veröffentlichungstag der Anmeldung :
10.06.87 Patentblatt 87/24

(45) Bekanntmachung des Hinweises auf die
Patenterteilung :
16.01.91 Patentblatt 91/03

(84) Benannte Vertragsstaaten :
AT BE CH DE FR GB IT LI NL SE

(56) Entgegenhaltungen :
US-A- 4 254 465

(73) Patentinhaber : LITEF GmbH
Lörracher Strasse 18
D-7800 Freiburg/Br. (DE)

(72) Erfinder : Beyer, Otto, Dr. rer.nat.Dipl.-Phys.
Berg-Isel-Strasse 16
D-7800 Freiburg (DE)
Erfinder : Steiert, Peter, Dipl.-Phys.
Hauptstrasse 87
D-7834 Herbolzheim (DE)

(74) Vertreter : TER MEER - MÜLLER -
STEINMEISTER & PARTNER
Mauerkircherstrasse 45
D-8000 München 80 (DE)

EP 0 224 602 B1

## Beschreibung

Die Erfindung betrifft ein Verfahren zur schnellen Berechnung der Lagewinkel für mit analytischen Plattformen ausgerüstete Fahrzeuge nach dem Oberbegriff des Patentanspruchs 1, wobei unter dem Begriff "analytische Plattformen" in erster Linien Strapdown-Systeme (SD-Systeme) verstanden werden, die für Wasser-, Land- und für Luftfahrzeuge geeignet sind.

Bei der Auslegung von Stabilisierungsregelkreisen wird vielfach eine Regelung ausschließlich durch die Verwendung der Winkelgeschwindigkeiten aus einem Lagereferenzsystem realisiert (z. B. Fluglageregelung bei Luftfahrzeugen). Für viele Anwendungen ist allerdings die gleichzeitige Verwendung von Winkelgeschwindigkeit und Lagewinkel aus dem SD-System erforderlich.

Herkömmliche SD-Systeme z. B. gemäß US-A-4254 465 arbeiten nach folgendem Prinzip (vgl. Fig. 1): Die Daten von inertialen Sensoren 1 werden mit vergleichsweise hoher Geschwindigkeit ausgelesen, anschließend in der durch Bezugshinweis 2 gekennzeichneten Baugruppe skaliert und kompensiert, werden dann in fahrzeugfeste (körperfeste) Winkelgeschwindigkeiten $\overline{\omega}_{ib}^{b}$ und Beschleunigungswerte umgerechnet und können bei Bedarf entsprechend schnell an einem Ausgang 9 ausgegeben werden. Die weiteren interessierenden Größen, wie z. B. Position, Geschwindigkeit und Lagewinkel des Fahrzeugs werden üblicherweise durch die relativ aufwendige und entsprechend langsame analytische Plattformrechnung 3 erhalten.

Die Datenausgaberate z. B. der Position, der Lagewinkel und der Geschwindigkeitswerte, ist 2- bis 10-mal kleiner als die Datenausgaberate der körperfesten Winkelgeschwindigkeiten $\overline{\omega}_{ib}^{b}$. Für eine Reihe von Stabilisierungsaufgaben ist auch eine schnelle Ausgabe der Lagewinkel $\theta$ wünschenswert oder für manche Anwendungsfälle sogar nötig.

Der Erfindung liegt die Aufgabe zugrunde, ein Verfahren zu entwickeln, mit dem sich unter Erhaltung der Genauigkeit, wie sie sich aus der analytischen Plattformrechnung ergibt, eine schnellere Berechnung der Lagewinkel ohne wesentlich höheren Aufwand erreichen läßt.

Das aus der Erfindung entstandene Verfahren zur schnellen Berechnung von Lagewinkeln für mit analytischen Plattformen ausgerüstete Fahrzeuge, bei dem die von inertialen Sensoren mit relativ kurzen Taktzeiten gelieferten Winkelgeschwindigkeiten und fahrzeugfeste Beschleunigungswerte nach Skalierung und Kompensation einer analytischen Plattformrechnung zugeführt werden, die mit bestimmten, relativ langsamen Taktzeiten, die ganzzahligen Vielfachen der schnellen Taktzeiten entsprechen, sogenannte langsame Lagewinkel liefert, ist erfindungsgemäß dadurch gekennzeichnet, daß

– zur Reduzierung der Zeitabstände, d. h. der Totzeiten, bei der Berechnung der Lagewinkel außer den aus den von den Sensoren nach Skalierung und Kompensation mit den relativ kurzen Taktzeiten gelieferten Winkelgeschwindigkeiten sogenannte schnelle Lagewinkel in einer der kurzen Taktzeit entsprechenden Frequenz errechnet werden,

– zu Zeitpunkten, zu welchen gleichzeitig langsame und schnelle Lagewinkel zur Verfügung stehen, der Winkeldifferenzwert der beiden Lagewinkelwerte gebildet wird und daß

– zur Berücksichtigung langsam veränderlicher Einflußgrößen, wie Erddrehrate, Transportrate des Fahrzeugs sowie eventueller Korrekturen durch ein Kalmanfilter, zu festgelegten Zeitpunkten mit Zeitabständen der langsamen Taktzeiten die errechneten schnellen Lagewinkel um den Winkeldifferenzwert korrigiert und dieser korrigierte Lagewinkel mit einer den kurzen Takzeiten entsprechenden Frequenz bereitgestellt und für die weiteren Lagewinkelberechnungen einem Eingang einer Lagewinkelpropagation eingegeben werden.

Mit der Erfindung wird unter Beibehaltung der Langzeitgenauigkeit der analytischen Plattformrechnung eine schnelle Berechnung der Lagewinkel ohne wesentlich höheren Aufwand ermöglicht. Dabei werden die schnellen Lagewinkel nach einem recht einfachen Algorithmus berechnet und erfindungsgemäß mit den genauen Lagewinkeln der Plattformrechnung so verknüpft, daß korrekte Lagewinkel mit der kurzen Taktfolgezeit ausgegeben werden.

Als Beispiel für eine vorteilhafte Anwendung der Erfindung sei die Stabilisierung einer Panzerkanone gewählt. Der Elevationsbereich der Kanone reicht üblicherweise von –10° bis +30° gegen das Turmkoordinatensystem. Der Panzer habe die Kanone auf ein Ziel gerichtet und die Regelung soll die Kanone auch in voller Fahrt auf diesem Ziel halten. Überfährt der Panzer jetzt ein Hindernis (z. B. niedrige Mauer), kann es leicht passieren, daß der Elevationsbereich der Kanone überschritten wird. Im Fall einer Regelung allein mit Winkelgeschwindigkeiten "läuft" die Kanone an einen vorgesehenen Anschlag und verliert bei der weiteren Bewegung des Fahrzeugs das Ziel. Das Ziel muß nach Überwindung des Hindernisses durch den Richtschützen mit Hilfe einer Optik neu angerichtet werden. Im Falle einer Regelung gemäß der Erfindung unter Einbeziehung der Lagewinkel läuft die Kanone zwar auch an den Anschlag, aber wenn das Hindernis überwunden ist, stellt der Regelkreis einen Unterschied zwischen Soll- und Ist-Lage der Kanone fest und regelt diese Differenz sofort aus, so daß der Panzer das Ziel nicht endgültig verliert. Besteht also in Ausnahmefällen auch die Möglichkeit, daß das zu stabilisierende Gerät an einen-vorgesehenen mechanischen Anschlag "läuft", so sollten im Stabilisierungsregelkreis außer Winkelgeschwindigkeiten auch die Lagewinkel Berücksichtigung finden. Übliche SD-Systeme liefern aber die Lagewinkel mit deutlich niedrigerer Datenrate und somit entsprechend größerer Totzeit als die Winkelgeschwindigkeiten. Überschreitet die Totzeit einen gewissen, von der Bandbreite des Regelkreises abhängigen Wert, so läßt sich eine stabile Regelung nicht mehr erreichen. Mit der Erfindung dagegen werden die erwähnten Totzeiten so verkürzt, daß eine stabile Regelung auch bei plötzlichen Richtungsänderungen des Fahrzeugs möglich ist.

Die Erfindung und vorteilhafte Einzelheiten werden nachfolgend unter Bezug auf die Zeichnung in prinzipieller Ausführungsform näher erläutert. Es zeigen :

Fig. 1 das bereits erläuterte Prinzip des herkömmlichen Verfahrens, bei dem zwar Winkelgeschwindigkeitswerte mit relativ kurzer Taktfolgezeit die errechneten Größen, wie Position, Lagewinkel und Geschwindigkeitswerte jedoch als Ergebnis der analytischen Plattformrechnung nur mit relativ langsamer Taktfolgezeit bereitgestellt werden können, und

Fig. 2 ein der Fig. 1 entsprechendes Prinzipschaltbild, in dem der der Erfindung entsprechende Teil ergänzt und mit einer gestrichelten Umrandung 4 gekennzeichnet ist.

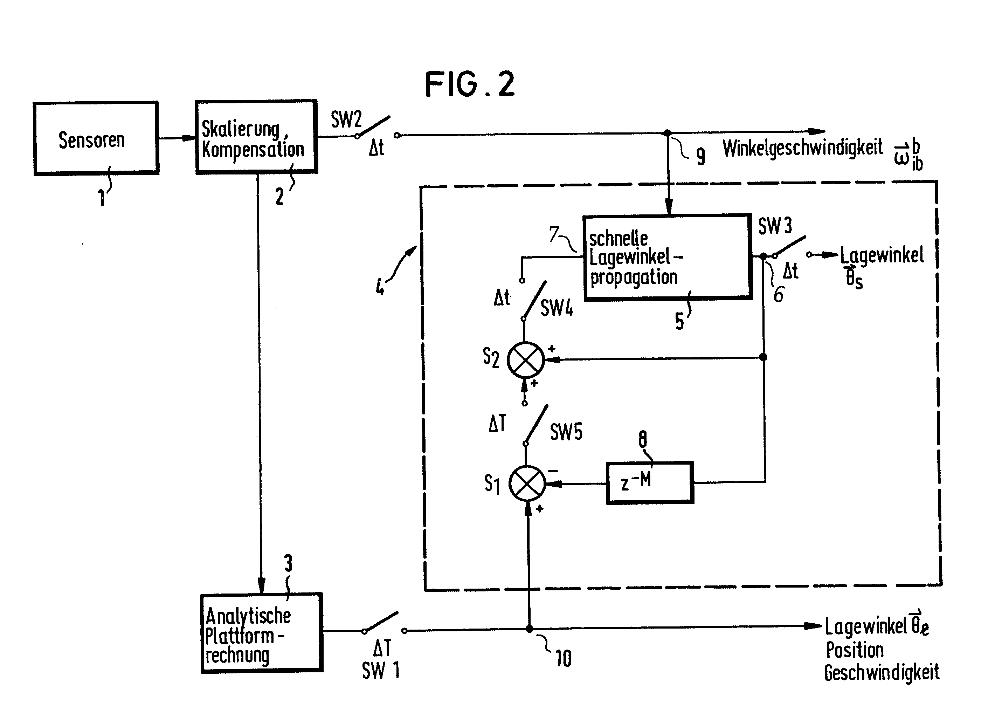

Die Fig. 2 zeigt eine ausführliche Prinzipdarstellung des erfindungsgemäßen Verfahrens zur schnellen Berechnung von Lagewinkeln $\bar{\theta}_s$. Die Eingangsgrößen des Verfahrens sind

– die Winkelgeschwindigkeit $\bar{\omega}_{ib}^b$ des fahrzeugfesten (körperfesten) Koordinatensystems (Body-Systems) gegenüber einem Inertialkoordinatensystem in Koordinaten des körperfesten Systems und

– die "langsamen" Lagewinkel $\bar{\theta}_\ell$ aus der analytischenPlattformrechnung 3.

Die Winkelgeschwindigkeiten $\bar{\omega}_{ib}^b$ liefern die im Fahrzeug eingebauten Kreisel nach Skalierung und Kompensation. Die "langsamen" Lagewinkel $\bar{\theta}_\ell$, die aus der analytischen Plattformrechnung 3 erhalten werden, beschreiben die Lage des körperfesten Koordinatensystems bezüglich des Navigationskoordinatensystems (lokales Horizontsystem). Die Winkelgeschwindigkeit $\bar{\omega}_{ib}^b$ steht mit hoher Datenrate zur Verfügung und der "langsame" hagewikel $\bar{\theta}_\ell$ mit niedriger Datenrate. Die Taktzeit der Plattformrechnung 3 ist mit $\Delta T$ (Schalter SW 1) bezeichnet, während die Winkelgeschwindigkeiten $\bar{\omega}_{ib}^b$ mit kurzer Taktzeit (Schalter SW 2) $\Delta t$ ausgegeben werden. Mit Hilfe des an sich bekannten Algorithmus

$$\Delta\theta = \underline{/\bar{Q} \cos\phi - R\sin\phi\underline{/}} \cdot \Delta t \qquad (1a)$$

$$\Delta\phi = \underline{/\bar{P} + tg\theta\underline{/}\bar{Q}\sin\phi + R\cos\phi\underline{//}} \cdot \Delta t \qquad (1b)$$

$$\Delta\psi = \frac{\underline{/\bar{Q}\sin\phi + R\cos\phi\underline{/}}}{\cos\theta} \cdot \Delta t \qquad (1c)$$

lassen sich aus $\bar{\omega}_{ib}^b$ mit den Komponenten P, Q, R die Lagewinkeländerungen $\Delta\bar{\theta}$ mit den Komponenten $\Delta\bar{\theta}$, $\Delta\phi$ und $\Delta\psi$ bei fester Position des Fahrzeugs berechnen. Dabei bezeichnet $\bar{\omega}_{nb}^b$ die Winkelgeschwindigkeiten des körperfesten Koordinatensystems gegen das Navigationskoordinatensystem in Koordinaten des körperfesten Koordinatensystems. Es gilt

$$\vec{\omega}_{ib}^b = \vec{\omega}_{in}^b + \vec{\omega}_{nb}^b \qquad (2)$$

Dabei ist die Größe $\bar{\omega}_{in}^b$ die Erddrehrate. Die Erfindung geht von der in der Regel zutreffenden Tatsache aus, daß in (2) die Erddrehrate $\bar{\omega}_{in}^b$ eine nur langsam veränderliche Größe ist im Vergleich zur Lagewinkeländerung des Fahrzeugs. Entsprechendes gilt für die Transportrate, falls mit dem Fahrzeug Positionsänderungen vorgenommen werden.

Daher wird für den Algorithmus gemäß Gleichung (1) statt $\overline{\omega}_{nb}^b$ die Winkelgeschwindigkeit $\overline{\omega}_{ib}^b$ als Eingangsgröße verwendet. Die so erhaltenen Lagewinkel werden dann im Zeittakt der Plattformrechnung 3, also jeweils in Zeitabständen $\Delta T$ um z. B. die Erddrehrate $\overline{\omega}_{ie}^b$ korrigiert. Bei Positionsänderungen des Fahrzeugs durch Fahren wird die Transportrate analog zur Erddrehrate $\overline{\omega}_{in}^b$ als langsam veränderliche Größe berücksichtigt. Dasselbe gilt für die Korrekturen, die eventuell durch ein langsam laufendes Kalmanfilter anfallen.

Die Taktabstandszeit oder kurz "Taktzeit" $\Delta T$ für die Ausgabe der Ergebnisse der Plattformrechnung 3 ist in Systemen vorliegender Art prinzipiell ein ganzzahliges Vielfaches der Taktzeit $\Delta t$ für die Ausgabe der Winkelgeschwindigkeiten $\overline{\omega}_{ib}^b$.

Das heißt,

$$M = \Delta T / \Delta t \qquad (3).$$

Der Wert für M liegt bei den heute gebräuchlichen Systemen zwischen 2 und 10. Werden die Lagewinkel $\theta$ nur mit Hilfe der Winkelgeschwindigkeiten $\overline{\omega}_{ib}^b$ propagiert, so unterscheiden sich $\overline{\theta}_\ell(T_n)$ und $\overline{\theta}_s(T_n)$ nur durch Einflüsse von zeitlich langsam veränderlichen Größen, wie Erddrehrate $\overline{\omega}_{ie}^b$, Transportrate und eventuelle Korrekturen durch ein Kalmanfilter. Durch Differenzbildung zu geeigneten Zeitpunkten, deren Abstand der Taktzeit $\Delta T$ entspricht, und Aufaddieren dieser Differenzwerte als Korrektur für die schnellen Lagewinkel $\overline{\theta}_s$ erhält man schnelle Lagewinkel mit dem korrekten Langzeitverhalten.

Das Verfahren (vgl. Fig. 2) läßt sich wie folgt darstellen :

$$\vec{\theta}_s (T_n + (m + 1) \Delta t) = \vec{\theta}_s (T_n + m \Delta t) \qquad (4.a)$$

$$+ \Delta \vec{\theta} (T_n + m \Delta t) \qquad (4.b)$$

$$+ \delta_{M-1,m} \left[ \vec{\theta}_\ell (T_n) - \vec{\theta}_s (T_n) \right] \qquad (4.c)$$

mit

$$\delta_{i,j} = \begin{cases} 1 & \text{für } i = j \\ 0 & \text{sonst} \end{cases}$$

$$T_{n+1} = T_n + M \Delta t \qquad (5)$$

und

$$m = 0, 1, 2, \ldots, M-1; \quad n = 0, 1, 2, \ldots$$

$\Delta \overline{\theta}$ wird dabei nach Gleichung (1) berechnet. Die Gleichung (5) besagt, daß man für m = M den Zeitpunkt

$T_{n+1}$ erreicht hat und m wieder von 0 beginnend hochgezählt wird. Bei dieser Darstellung wurde vorausgesetzt, daß der Wert von $\overline{\theta}\ell(T_n)$ zum Zeitpunkt $[T_n+(M-1)\Delta t]$ zur Verfügung steht.

Das Verfahren gestattet es auch, den Korrekturzeitpunkt auf der Zeitachse zu verschieben, um dadurch eine Anpassung an unterschiedliche Anforderungen zu erreichen. Wichtig ist nur, daß für die Berechnung der Korrektur $\overline{\theta}_\ell$ und $\overline{\theta}_s$ zu einem gemeinsamen Zeitpunkt zur Verfügung stehen. Eine zeitliche Verschiebung der Korrektur erreicht man durch Ändern der Indizes im Korrekturglied von Gleichung (4.c). Bei einer Vorverlegung des Korrekturzeitpunkts z. B. erhält man mit (M-k)>0 statt Gleichung (4.c) das Korrekturglied $\delta_{M-k,m}[\overline{\theta}_\ell(T_n)-\overline{\theta}_s(T_n)]$.

Soll der Korrekturzeitpunkt gegenüber Gleichung (4) verzögert werden, so ist unter Berücksichtigung von (M-j) $\geq$ 0 und k = 1 oder 2 oder 3 ... der Gleichungsteil (4.c) zu ersetzen durch

$$\delta_{M-j,m} \left[ \vec{\theta}_\ell (T_{n-k}) - \vec{\theta}_s (T_{n-k}) \right]$$

Die gewünschten schnellen Lagewinkel stehen nun für die möglichen Anwendungen zur Verfügung. Eine Einschränkung besteht hinsichtlich des Kippwinkelbereichs von –90° bis +90° und ergibt sich aus dem verwendeten "schnellen" Algorithmus nach Gleichung (1). Der Nenner in Teilgleichung (1.c) darf nicht 0 werden, da sonst die Richtungsreferenz bis zum nächsten Korrekturzeitpunkt verloren geht. Diese Bedingung, daß der Betrag des Kippwinkels einen Wert von 90° nicht erreichen darf, stellt für Land- und Wasserfahrzeuge und für bestimmte Luftfahrzeuge, die keine Loopings ausführen können (z. B. Hubschrauber), keine echte Einschränkung dar.

Die Fig. 2 zeigt eine genauere Darstellung der schnellen Lagewinkelberechnung (Funktionsblock 4). Die Eingangsgrößen des Verfahrens sind :

– Die Winkelgeschwindigkeit des körperfesten Koordinatensystems (Body-System) gegenüber dem Inertialsystem in Koordinaten des körperfesten Systems $\overline{\omega}_{ib}^b$ am Punkt 9.

– Die langsamen Lagewinkel $\overline{\theta}_\ell$ aus der Plattformrechnung 3 am Punkt 10.

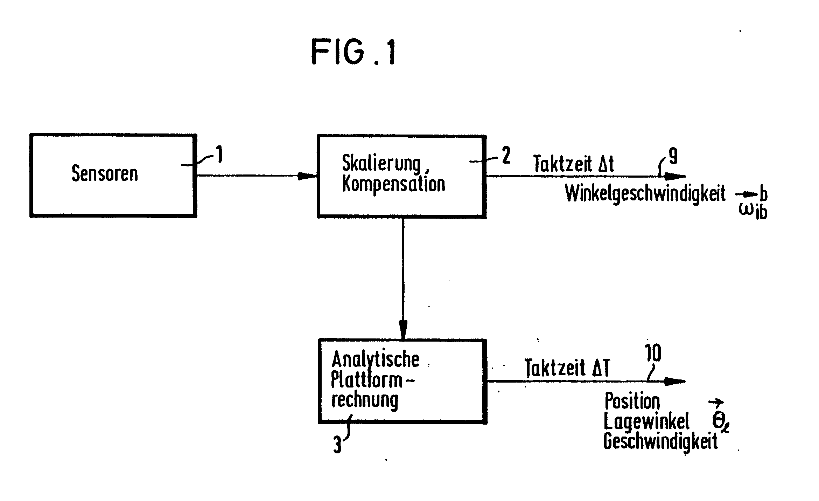

Die Lagewinkel $\overline{\theta}_\ell$ beschreiben dabei die Lage des körperfesten Koordinatensystems bezüglich des Navigationskoordinatensystems (lokales Horizontsystem). Diese Eingangsdaten werden durch eine herkömmliche analytische Plattformrechnung 3 gemäß Fig. 1 zur Verfügung gestellt. Die Taktzeit der Plattformrechnung 3 ist $\Delta T$ und wird symbolisiert durch einen Schalter SW 1, während die Winkelgeschwindigkeiten $\overline{\omega}_{ib}^b$ mit der Taktrate $\Delta t$ über einen Schalter SW2 ausgegeben werden. Dabei gilt

$$M = \Delta T / \Delta t .$$

Die schnelle Lagewinkelberechnung im Funktionsblock 4 enthält zwei Datenzweige. Der erste Zweig verläuft vom Ausgang 6 der Lagewinkelpropagation 5 über einen Summationspunkt S2 zum Eingang 7 der Lagewinkelpropagation 5. Dieser erste Zweig arbeitet mit hoher Datenrate, symbolisiert durch einen Schalter SW4.

Der zweite Datenzweig geht auch vom Ausgang 6 der Lagewinkelpropagation 5 aus. Er führt über eine Verzögerungseinrichtung 8, über einen Summationspunkt S1 zum Summationspunkt S2. Dieser zweite Zweig arbeitet mit einer Datenrate $\Delta T$, dargestellt durch einen Schalter SW5. Die Eingangsdaten des Funktionsblocks 4 werden bei der Lagewinkelpropagation 5 verwendet bzw. dem Summationspunkt S1 zugeführt.

Die Berechnung der schnellen Lagewinkel geschieht nun wie folgt :

Aus den bekannten schnellen Lagewinkeln $\overline{\theta}_s(t)$ am Ausgang 6 und den Winkelgeschwindigkeiten $\overline{\omega}_{ib}^b$ am Punkt 9 wird $\Delta\overline{\theta}$ berechnet und $\overline{\theta}_s(t + \Delta t)$ als Summe von $\overline{\theta}_s(t)$ und $\Delta\overline{\theta}$ gebildet. Dieses Ergebnis wird dann als bekannter schneller Lagewinkel $\overline{\theta}_s$ über den Summationspunkt S2 wieder auf den Eingang 7 der Lagewinkelpropagation 5 zurückgeführt. Mit den dann aktuellen Winkelgeschwindigkeiten $\overline{\omega}_{ib}^b$ wird der bekannte Lagewinkel $\overline{\theta}_s$ erneut propagiert und das Ergebnis erscheint wieder am Ausgang 6, usw.

Diesem schnellen Zweig ist der zweite Zweig unterlagert. Im Zeitabstand $\Delta T$ gelangt hier der jeweils aktuelle Lagewinkel $\overline{\theta}_s$ in die Verzögerungseinrichtung 8 (Verzögerung um die Zeit M'$\Delta t$). Erscheint nun am Punkt 10 der Plattformrechnung 3 der Lagewinkel $\bar{\theta}_\ell$, so wird am Summationspunkt S1 aus diesem Lagewinkel $\bar{\theta}_\ell$ und dem entsprechend verzögerten schnellen Lagewinkel $\bar{\theta}_s$ die Differenz gebildet. Dabei erfolgt die Verzögerung von $\bar{\theta}_s$ durch die Verzögerungseinrichtung 8 so, daß an den Summationspunkt S1 nur Lagewinkel gelangen, die für denselben Zeitpunkt gültig sind.

Diese Differenz wird nun mit der Taktrate $\Delta T$ als Korrektur der schnellen Lagewinkel $\bar{\theta}_s$ dem Summationspunkt S2 zugeführt. Falls am Summationspunkt S2 keine Korrektur anliegt, durchlaufen die Lagewinkel $\bar{\theta}_s$ des ersten Zweigs diesen Summationspunkt S2 ungeändert.

Die Realisierung des Funktionsblocks 4 erfolgt am einfachsten mit Hilfe eines Mikroprozessors. Die Verzögerung (in 8) erfolgt am einfachsten darduch, daß in der Taktzeit $\Delta T$ die jeweiligen schnellen Lagewinkel $\bar{\theta}_s$ in einem Speicher abgelegt werden und bei der Ausgabe der Lagewinkel $\bar{\theta}_\ell$ mit diesen die Differenz gebildet wird (Summationspunkt S1). Diese Differenz wird in der Taktzeit $\Delta T$ zu den schnellen Lagewinkeln $\bar{\theta}_s$ addiert (Summationspunkt S2). Das Ergebnis bildet dann mit den Winkelgeschwindigkeiten $\bar{\omega}_{ib}^b$ die Basis für die weitere Winkelpropagation.

In vielen praktischen Fällen können aufgrund der relativ geringen Zahl von Rechenoperationen für das erfindungsgemäße Verfahren die Baugruppe 2 und der Funktionsblock 4 in ein und demselben Mikroprozessor realisiert werden.

## Ansprüche

1. Verfaren zur schnellen Berechnung von Lagewinkeln für mit analytischen Plattformen ausgerüstete Fahrzeuge, bei dem die von inertialen Sensoren (1) mit relativ kurzen Taktzeiten ($\Delta t$) gelieferten Winkelgeschwindigkeiten $\bar{\omega}_{ib}^b$ und fahrzeugfeste Beschleunigungswerte nach Skalierung und Kompensation (2) einer analytischen Plattformrechnung (3) zugeführt werden, die mit bestimmten, relativ langsamen Taktzeiten ($\Delta T$), die ganzzahligen Vielfachen der schnellen Taktzeiten ($\Delta t$) entsprechen, sogenannte langsame Lagewinkel ($\bar{\theta}_1(T_n)$ mit $T_n = n\Delta T$) liefert, **dadurch gekennzeichnet, daß**
   – zur Reduzierung der Zeitabstände, d. h. der Totzeiten, bei der Berechnung Lagewinkel ($\bar{\theta}_\ell(T_n)$) außer den aus den von den Sensoren (1) nach der Skalierung und Kompensation (2) mit den zu den relativ kurzen Taktzeiten ($\Delta t$) gelieferten Winkelgeschwindigkeiten $\bar{\omega}_{ib}^b$ sogenannte schnelle Lagewinkel ($\bar{\theta}_s(T_n+m\Delta t)$) in einer der kurzen Taktzeit ($\Delta t$) entsprechenden Frequenz errechnet werden,
   – zu Zeitpunkten, zu welchen gleichzeitig langsame und schnelle Lagewinkel ($\bar{\theta}_\ell, \bar{\theta}_s$) zur Verfügung stehen, der Winkeldifferenz $[\bar{\theta}_1(T_n) - \bar{\theta}_s(T_n)]$ der beiden Lagewinkelwerte gebildet wird, und daß
   – zur Berücksichtigung langsam veränderlicher Einflußgrößen, wie Erddrehrate, Transportrate des Fahrzeugs sowie eventueller Korrekturen durch ein Kalmanfilter, zu festgelegten Zeitpunkten mit Zeitabständen der langsamen Taktzeiten ($\Delta T$) der errechnete schnelle Lagewinkel $[\bar{\theta}_s(T_n+(m+1)\Delta t)]$ um die Winkeldifferenz $[\bar{\theta}_\ell(T_n) - \bar{\theta}_s(T_n)]$ korrigiert und dieser korrigierte Lagewinkel mit einer den kurzen Taktzeiten ($\Delta t$) entsprechenden Frequenz bereitgestellt und für die weiteren Lagewinkelberechnungen einem Eingang (7) einer Lagewinkelpropagation (5) eingegeben wird.

2. Verfahren nach Anspruch 1, **dadurch gekennzeichnet**, daß die berechneten schnellen Lagewinkel ($\bar{\theta}_s$) an einem Ausgang (6) der Lagewinkelpropagation (5) ausgegeben werden und daß die Korrektur $[\bar{\theta}_\ell(T_n) - \bar{\theta}_s(T_n)]$ für die Berechnung der weiteren schnellen Lagewinkel berücksichtigt wird.

## Claims

1. Method for the rapid computation of course angles for vehicles equipped with analytical platforms, in which method the angular velocities $\bar{\omega}_{ib}^b$ and acceleration values, fixed in relation to the vehicle, supplied by inertial sensors (1) with relatively short cycle times ($\Delta t$), after scaling and compensation (2), are supplied to an analytical platform computation system (3), which supplies so-called slow course angles ($\bar{\theta}_\ell(T_n)$ where $T_n = n\Delta T$) with specified, relatively slow cycle times ($\Delta T$), which correspond to integral multiples of the rapid cycle times ($\Delta t$), characterized in that
   – in order to reduce the time intervals, i.e. the dead times, in the computation of the course angles ($\bar{\theta}_\ell(T_n)$), in addition to the angular velocities $\bar{\omega}_{ib}^b$ supplied by the sensors (1) after scaling and compensation (2) with the relatively short cycle times ($\Delta t$), so-called rapid course angles ($\bar{\theta}_s(T_n+m\Delta t)$) are computed in a frequency corresponding to the short cycle time ($\Delta t$),
   – at times at which slow and rapid course angles ($\bar{\theta}_\ell, \bar{\theta}_s$) are simultaneously available, the angle difference value $[\bar{\theta}_\ell(T_n) - \bar{\theta}_s(T_n)]$ of the two course angle values is formed and in that

6

– in order to take account of slowly variable influencing quantities, such as the rate of rotation of the earth, the rate of travel of the vehicle and any possible corrections due to a Kalman filter, the computed rapid course angle $[\bar{\theta}_s(T_n+(m+1)\Delta t)]$ is corrected by the angle difference $[\bar{\theta}_\ell - (T_n)\bar{\theta}_s(T_n)]$ at specified times with time intervals of the slow cycle times ($\Delta t$) and this corrected course angle is prepared with a frequency corresponding to the short cycle times ($\Delta t$) and fed to an input (7) of a course angle propagation system (5) for the further course angle computations.

2. Method according to Claim 1, characterized in that the computed rapid course angles $(\bar{\theta}_s)$ are output at an output (6) of the course angle propagation system (5) and in that the correction $[\bar{\theta}_\ell(T_n) - \bar{\theta}_s(T_n)]$ for the computation of the further rapid course angles is taken into account.

## Revendications

1. Procédé pour calculer rapidement les angles de position de véhicules équipés de plateformes analytiques, dans lequel les vitesses angulaires $\overline{\omega}_{ib}^b$ données par les capteurs inertiaux (1) à des cadences relativement rapides ($\Delta t$) et les valeurs d'accélération du véhicule sont, après cadrage et compensation (2) fournis à une calculatrice de plateforme analytique (3), laquelle fournit des angles de position dits lents $(\bar{\theta}_\ell(T_n)$ avec $T_n = n\Delta T)$, selon des cadences déterminées, ($\Delta T$) relativement lentes, qui correspondent à des multiples entiers des cadences rapides ($\Delta t$), caractérisé par le fait que,

– en vue de réduire les intervalles, c'est-à-dire les temps morts, dans le calcul des angles de position $(\bar{\theta}_\ell(T_n))$, en dehors de ceux qui sont donnés par les capteurs (1) après cadrage et compensation (2)avec les vitesses angulaires $\overline{\omega}_{ib}^b$ fournies à des cadences relativement rapides ($\Delta t$), des angles de position dits rapides $(\bar{\theta}_s(T_n+m\Delta t)$ sont calculés dans une fréquence correspondants à la cadence rapide,

– aux instants pour lesquels on dispose simultanément d'angles de position lents et rapides $(\bar{\theta}_\ell, \theta_s)$, il est formé la différence angulaire $(\bar{\theta}_\ell(T_n) - \bar{\theta}(T_n))$ des deux valeurs d'angle de position et que,

– pour tenir compte des grandeurs d'influence à variation lente, telles que l'incidence de la rotation de la terre, du transport du véhicule, ainsi que des corrections éventuelles par un filtre de Kalman, l'angle de position rapide calculé $(\bar{\theta}_s(T_n+(m+1)\Delta t))$ est, à des instants prédéfinis selon les intervalles des cadences lentes ($\Delta T$), corrigé de la différence angulaire $(\bar{\theta}_\ell(T_n)\Delta\bar{\theta}_s(T_n))$, et cet angle de position corrigé est préparé selon une fréquence correspondant aux cadences rapides ($\Delta t$) et fourni à une entrée (7) d'une unité de propagation (5) d'angles de position.

2. Procédé selon la revendication 1, caractérisé par le fait que les angles de position $(\bar{\theta}_s)$ rapides calculés sont fournis à une entrée (6) de l'unité de propagation (5) d'angles de position et que la correction $(\bar{\theta}_\ell(T_n) - \bar{\theta}_s(T_n))$ est prise en compte pour le calcul des autres angles de position rapides.

## FIG.1

Sensoren — 1

Skalierung, Kompensation — 2

Taktzeit $\Delta t$ — 9

Winkelgeschwindigkeit → $\omega_{ib}^{b}$

Analytische Plattform-rechnung 3

Taktzeit $\Delta T$ — 10

Position
Lagewinkel $\vec{\Theta}_{\ell}$
Geschwindigkeit

EP 0 224 602 B1

# FIG. 2

Sensoren 1

Skalierung, Kompensation 2

SW2 Δt

Winkelgeschwindigkeit $\vec{\omega}_{ib}^{b}$ 9

schnelle Lagewinkel-propagation 5

SW3 Δt 6

Lagewinkel $\vec{\theta}_S$

7

Δt SW4

S2 ⊗ +

ΔT SW5

z⁻M 8

S1 ⊗ −

4

Analytische Plattform-rechnung 3

ΔT SW1

10

Lagewinkel $\vec{\theta}_\ell$
Position
Geschwindigkeit